# EUROPÄISCHE PATENTSCHRIFT

(11) **EP 0 664 878 B1**
(45) Veröffentlichungstag und Bekanntmachung des Hinweises auf die Patenterteilung: **11.12.1996**
(21) Anmeldenummer: 93922932.4
(22) Anmeldetag: 12.10.1993
(51) Int. Cl.: G01C 17/38

(54) **VERFAHREN ZUR ERMITTLUNG DES GIERWINKELS EINES FAHRZEUGES**
PROCESS FOR DETERMINING A VEHICLE YAW ANGLE
PROCEDE PERMETTANT DE DETERMINER L'ANGLE D'EMBARDEE D'UN VEHICULE

(30) Priorität: 14.10.1992 DE 4234651
(43) Veröffentlichungstag der Anmeldung: 02.08.1995
(73) Patentinhaber: VDO Adolf Schindling AG, D-60326 Frankfurt/Main (DE)
(72) Erfinder: GRULER, Martin, D-78554 Aixheim (DE); HILGER, Gernot, D-78647 Trossingen (DE)
(86) Internationale Anmeldenummer: EP9302794
(87) Internationale Veröffentlichungsnummer: WO9409341

(56) Entgegenhaltungen:
- EP-A- 0 067 338
- EP-A- 0 451 839
- WO-A-88/05153
- WO-A-93/06434
- DE-C- 4 111 171

## Beschreibung

Die Erfindung betrifft ein Verfahren zur Ermittlung des Gierwinkels eines Fahrzeuges gemäß dem Oberbegriff des ersten Anspruchs.

Im Dokument DE 41 11 171 C1 wird vorgeschlagen, den Vektor der magnetischen Induktion B des Erdmagnetfeldes durch eine zweikanalig ausgebildete, induktive Sensoranordnung fortlaufend komponentenweise zu erfassen und die von dieser Sensoranordnung abgegebenen Meßsignale sowohl einem Matrixspeicher als auch einem parallel dazu angeordneten Ringspeicher zur Meßwertaufzeichnung zuzuführen, wobei in den Speicherzellen des Matrixspeichers die Häufigkeit wertgleicher Meßwerte gezählt und im Ringspeicher die Meßwerte in der Reihenfolge ihrer Erfassung betragsmäßig eingelesen werden. Die derart eingelesenen Meßwerte schaffen eine grundsätzliche Voraussetzung, um anschließend mittels einer Auswerteeinheit die ungeradlinige Bewegungsbahn eines Fahrzeuges innerhalb des durch die Schleifendauer des Ringspeichers festgelegten Zeitintervalls rekonstruierbar zu machen.

Wenn die durch die beiden Erfassungsrichtungen der Sensoranordnung aufgespannte Meßebene parallel zur Fahrbahnebene des Fahrzeuges verläuft, werden durch die Sensoranordnung die beiden in die Fahrbahnebene projizierten Komponenten Bx und By des Erdmagnetfeldes erfaßt. Zeitgleich erfaßte, d.h. zusammengehörende Komponenten bilden ein Meßwertpaar (X;Y).

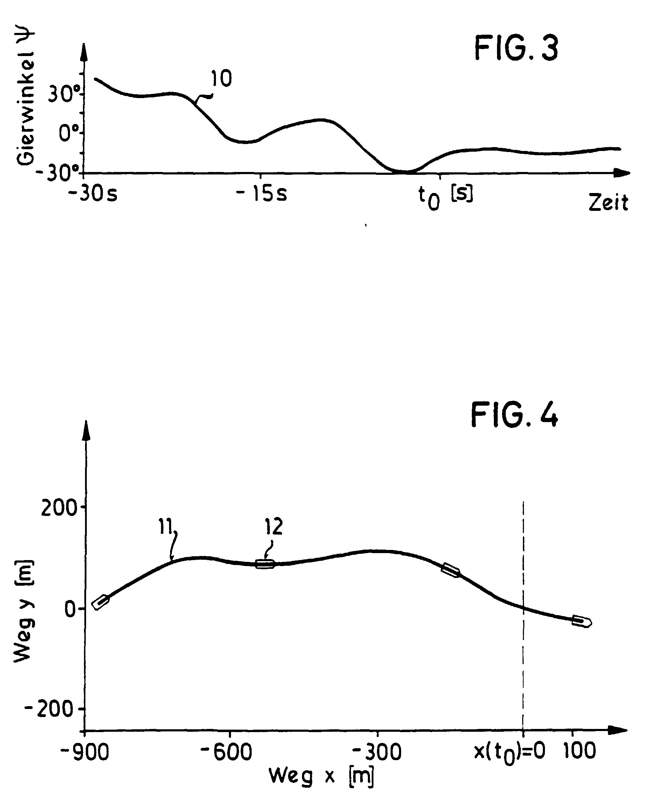

In den Figuren 3 und 4 der genannten Schrift ist die zweidimensionale Anordnung der Speicherzellen im Matrixspeicher als Netzebene dargestellt. Ausgehend von einem zunächst bis zur Festlegung beliebigen Referenzpunkt in der Netzebene wird parallel zur x-Achse der Speicherzellenkonfiguration jeweils der zur Bx-Komponente gehörende Meßwert X und parallel zur y-Achse der zur By-Komponente gehörende Meßwert Y registriert. Zur optimalen Ausnutzung der zweidimensionalen Speicherzellenkonfiguration des Matrixspeichers ist es vorteilhaft, als Referenzpunkt für ein in die Netzebene hineingelegtes kartesisches Koordinatensystem nicht den Ursprung der Netzebene, d.h. einen ihrer Eckpunkte, sondern die Koordinate der den Meßbereichsmittelpunkt darstellenden Speicherzelle zu wählen und die Koordinaten X und Y auf diesen Referenzpunkt zu beziehen. Die Richtung der x-Achse der Speicherzellenkonfiguration wird als eine bevorzugte Referenzrichtung festgelegt, jedoch ist diese Zuordnung nicht zwingend. Für das anmeldegegenständliche Verfahren ist es lediglich erforderlich, in der Netzebene überhaupt eine Richtung als Bezugsachse für Winkelangaben zu definieren. Nach dieser Festlegung adressiert jedes Meßwertpaar (X;Y) im Matrixspeicher in einem auf den Referenzpunkt bezogenen kartesischen Koordinatensystem eine bestimmte Speicherzelle (Sx;Sy).

Die während einer Kreisfahrt des Fahrzeuges erfaßten Meßwerte (X;Y) würden unter idealen Bedingungen, d.h. im störungsfreien Raum und in einem homogenen Magnetfeld, als Darstellung in der Netzebene zu einer kreisförmigen Verteilung führen. Tatsächlich ergibt die Darstellung der in einer realen Umwelt während einer unregelmäßig ungeradlinigen Bewegung eines Fahrzeuges erfaßten Meßwerte in der Netzebene des Matrixspeichers eine eher ellipsenförmige Meßwertverteilung. Die mathematische Darstellung der derart gewonnenen Meßwertverteilung wird auch Meßwertfigur genannt.

Als Störeinflüsse sollen hier beispielhaft statische Magnetfelder im Fahrzeug und aus der Umwelt sowie aus dem Fahrzeug kommende dynamische Störfelder erwähnt werden. Ferner können die Magnetfeldlinien des Erdmagnetfeldes lokal und richtungsabhängig durch magnetische Massen in der Nähe der Fahrbahn des Fahrzeuges verzerrt werden. Auch kann die Sensoranordnung hinsichtlich ihrer Erfassungsrichtungen einen Orthogonalitätsfehler aufweisen.

Es ist eine Erfahrungstatsache, daß die derart durch die erfaßten Meßwerte gebildete Meßwertfigur bezüglich ihrer Lage in der Netzebene des Matrixspeichers nicht stabil ist, sondern aufgrund diverser, auf die Sensoranordnung einwirkender Einflüsse zum Driften neigt.

Daher wurde in einer weiteren Anmeldung (DE 41 15 315 A1) der Anmelderin ausgehend von der erstgenannten Schrift vorgeschlagen, die Meßwertfigur mittels eines Regelkreises in ihrer Lage zu stabilisieren. Dazu wird in gewissen Zeitabständen die tatsächliche Mittelpunktslage der aktuellen Meßwertfigur ermittelt und mit den Sollmittelpunktskoordinaten, die vorzugsweise im Zentrum der Netzebene des Matrixspeichers liegen, verglichen. Alle danach eingelesenen Meßwerte werden dann abhängig vom Ergebnis dieses Vergleiches durch eine Verschiebung der Meßwertkoordinaten mit dem vom tatsächlichen Figurenmittelpunkt auf den Sollmittelpunkt weisenden Vektor korrigiert.

Auf diese Weise kann auch die benötigte Anzahl von Speicherzellen für den Matrixspeicher in wirtschaftlich vertretbaren Grenzen gehalten werden, was für ein kostensensibles fahrzeugtechnisches Produkt absolut notwendig ist. Ohne lagestabilisierende Maßnahmen müßte für die Netzebene des Matrixspeichers eine sehr große Anzahl von Speicherzellen zur Erfassung aller erdenklichen Wanderungsbewegungen der Meßwertfigur vorgehalten werden, was weder sinnvoll noch praktikabel ist, weil zu jedem Zeitpunkt von dieser großen installierten Speicherkapazität stets nur ein geringer Teil tatsächlich genutzt würde.

Es hat sich nun herausgestellt, daß mit der Nachführung der Meßwertfigur Störungen mit längerer Einwirkungsdauer erfolgreich ausgeglichen werden können. Lageveränderungen der Meßwertfigur infolge von Bauteilealterung oder Meßwertbeeinflussungen aufgrund der durch die Einbaulage der Meßeinrichtung im Fahrzeug bedingten Wechselwirkungen mit dem elektromagnetischem Umfeld können mit dem genannten Verfanren zufriedenstellend kompensiert werden.

Jedoch hat es sich auch gezeigt, daß das genannte Verfahren relativ schnell veränderliche oder kurzzeitige Störungen, z.B. solche mit einer Einwirkungsdauer im Bereich weniger Minuten wie bei von Temperatureinflüssen herrührenden Beeinflussungen, nur unzureichend entgegenwirkt, weil das Regelsystem aufgrund der umfangreichen Auswertung viel zu langsam reagiert. Die Durchführung der zahlreichen, teilweise sehr komplexen Verfahrensschritte erfordert für eine ständige korrigierende Nachführung eine viel zu lange Bearbeitungszeit. Tatsächlich ist das Verfahren auch nur dafür konzipiert, den Regelzyklus z.B. einmal täglich oder nur beim Anlassen des Fahrzeuges zu durchlaufen, nicht aber um eine ständige Nachführung zu realisieren. Die für einen Dauerbetrieb benötigte Rechnerleistung zur Durchführung des Verfahrens würde in einem kostensensiblen fahrzeugtechnischen Produkt zu einem nicht vertretbaren Aufwand führen, wenn man andernfalls nicht Gefahr laufen will, den Prozessor für die Wahrnehmung anderer wichtiger Aufgaben zu blockieren.

Um das beschriebene Regelverfahren zur Anwendung bringen zu können, muß außerdem zunächst eine größere Anzahl von Meßwerten eingelesen worden sein, da sonst eine Bestimmung der Mittelpunktskoordinaten der aktuellen Meßwertfigur nicht möglich ist. Das Verfahren versagt völlig, wenn im Zeitpunkt der beabsichtigten Korrektur der Meßwertkoordinaten und damit auch der Mittelpunktsnachführung die Meßwertfigur noch keine in sich geschlossene Figur darstellt. Damit das Regelverfahren hinreichend genau arbeitet, müssen sich die Meßwerte über den gesamten Umfang der Meßwertfigur verteilen, weil andernfalls bei ungünstiger Meßwertverteilung, z.B. einer Verteilung lediglich auf einem relativ kurzen Kreisbogenstück mit wenigen, aber dafür umso ausgeprägteren Häufungspunkten, die Ermittlung des Mittelpunktes der Meßwertfigur zu irreführenden und damit unbrauchbaren Ergebnissen führt.

Für eine möglichst genaue Bestimmung der Mittelpunktskoordinaten 20 der Meßwertfigur 21 (Figur 3 in DE 41 15 315 A1) ist daher die Kenntnis von deren gesamter Form notwendig. Die Bedeutung der Genauigkeit dieser Mittelpunktsbestimmung wird deutlich, wenn man bedenkt, daß es sich hierbei um den Scheitelpunkt für alle Winkelstücke handelt, die anschließend zur Rekonstruktion der Bewegungsbahn benutzt werden. Wenn die Mittelpunktskoordinaten der Meßwertfigur nur sehr ungenau bestimmt sind, d.h. also die ermittelten Koordinaten 20 tatsächlich gar nicht im Zentrum der Meßwertfigur liegen, ergeben sich auch zu den auf dem Umfang der Meßwertfigur liegenden Meßwerten nur äußerst fehlerhafte Winkelangaben. Mit diesen Winkelangaben werden aber bei der Bewegungsbahnrekonstruktion in einem Polygonzug sukzessive die aus der Fahrzeuggeschwindigkeit abgeleiteten, vom Fahrzeug pro Zeiteinheit durchfahrenen Wegstreckenabschnitte aneinandergereiht. Winkelangaben mit wenigen Grad Ungenauigkeit führen in der Aneinanderreihung zu einer völlig anderen Bewegungsbahn, so daß der Aussagegehalt dieses Aufzeichnungsverfahrens erheblich gemindert ist. Die Eignung eines systematisch mit großer Meßunschärfe behafteten Verfahrens wäre für ein Registriergerät, das nach einem Unfall zur objektiven Klärung der Schuldfrage beitragen soll, sehr in Frage gestellt, wenn die Rekonstruktion die genaue Lage der Bewegungsbahn nicht mit einiger Sicherheit erkennen ließe.

Die gattungsgemäßen Aufzeichnungsverfahren müssen somit vor dem Hintergrund ihrer speziellen Anwendung gewürdigt werden, nämlich daß es hier um den Einsatz in fahrzeugtechnischen Registriergeräten geht, welche letztlich die ungeradlinige Bewegung eines Fahrzeugs möglichst genau rekonstruierbar machen sollen, und zwar zu dem Zweck der objektiven Klärung der Schuldfrage in einem Unfallhergang. Für diesen Zweck ist der Gierwinkel des Fahrzeuges möglichst genau, d.h. insbesondere von Störeinflüssen befreit, die unter realen Umweltbedingungen unvermeidbar sind, zu ermitteln.

Unfallereignisse sind bezüglich ihres Eintrittszeitpunktes nicht vorhersehbar, weshalb das Registriergerät zu jedem Zeitpunkt über genaue, von Störeinflüssen bereinigte Meßdaten verfügen muß, um im Falle der Auswertung der Meßwerte nach einem Unfallereignis eine möglichst genaue und fehlerlose Rekonstruktion der Bewegungsbahn zu ermöglichen. Gerade dieser Forderung haben die bislang vorgeschlagenen Aufzeichnungsverfahren nicht in ausreichendem Maße Rechnung tragen können.

Nun offenbart die erst nach dem Prioritätstag dieser Anmeldung veröffentlichte Schrift WO 93/06 434 ein Verfahren zur Kompensation eines magnetischen Störfeldes in einem Fahrzeug, wobei das Fahrzeug eine Navigationseinrichtung aufweist. Das Verfahren geht davon aus, daß für eine Erstkompensation vom Fahrzeug in einer Eichfahrt eine kreisförmige Bewegungsbahn durchfahren und aus den dabei von einer Magnetfeldsonde erfaßten Meßwerten ein erster Satz Störfeldparameter ermittelt wird, die dann zur Transformation der Meßwerte auf eine kreisförmige Ortskurve benutzt werden. Die in Polarkoordinaten dargestellten Meßwerte der Magnetfeldsonde werden dabei in einem Speicher abgelegt, der als ein einen vollständigen Kreis abbildenden Segmentspeicher organisiert ist, wobei jede Speicherzelle einem bestimmten Winkelbereich entspricht. Der Radius eines Meßwertes wird in derjenigen Speicherzelle gespeichert, in deren zugeordnetem Winkelbereich der Meßwert liegt. Alle Radien, die in gleiche Speicherzellen des Segmentspeichers abgelegt sind, werden gemittelt. Jede Speicherzelle sammelt also zunächst bis zur Mittelwertbildung alle Meßwerte, die auf den gleichen Winkelbereich entfallen. Durch die Mittelwertbildung werden gewisse Störeinflüsse sicherlich kompensiert, jedoch läßt die Tatsache, daß in einem Winkelbereich mehrere in ihrem Zeitrang unbewertete Meßwerte für die Auswertung zur Verfügung stehen, nicht die aktuelle Lage der durch die Meßwerte beschriebenen Ortskurve erkennen, so daß Rückschlüsse auf die gerade jüngsten Drehbewegungen des Fahrzeugs nicht möglich sind. Nur ist jedoch eben diese Information für die Rekonstruktion eines Unfallhergangs sehr wichtig.

Aufgabe der vorliegenden Erfindung ist es nun, ein Verfahren der gattungsgemäßen Art dahingehend zu verbessern, die Voraussetzungen dafür zu schaffen, daß jederzeit, dh selbst dann, wenn bei der jüngsten Fahrt erst verhältnismäßig wenige Meßwerte erfaßt wurden, eben auch für diese vom Zeitrang letzte Fahrt eine genaue Rekonstruktion der Bewegungsbahn eines Fahrzeuges ermöglicht wird. Das zu schaffende Verfahren muß also insbesondere auch in der Lage sein, Störeinflüsse mit einer kurzen Einwirkungsdauer oder einer relativ schnell veränderlichen Einwirkungsintensität zu kompensieren.

Die Aufgabe wird durch die Merkmale des unabhängigen Patentanspruchs infolge einer optimierten Gierwinkelermittlung gelöst. Das beschriebene Verfahren nutzt die registrierte Meßwertverteilung und zeigt, wie der Mittelpunkt der Meßwertfigur als Bezugspunkt für den Gierwinkel des Fahrzeuges stets nur aus den jüngsten zu jeder Fahrtrichtung erfaßten und gespeicherten Meßwerten ermittelt werden kann.

Das erfindungsgemäße Verfahren erfaßt mit einer Sensoranordnung, die aus zwei orthogonal zueinander angeordneten Sensoren besteht, die Komponenten Bx und By des Erdmagnetfeldes und stellt diese Signale digitalisiert als Meßwertpaar (X;Y) einer Logikeinrichtung zur Verfügung. Damit beschreibt jedes Meßwertpaar (X;Y) einen bestimmten Meßwertpunkt in einem Koordinatensystem, dessen Achsen vorzugsweise an den Erfassungsrichtungen der Sensoranordnung ausgerichtet sind und dessen Ursprung durch die beiden Nullpunkte der orthogonal zueinander angeordneten Sensoren bestimmt ist. Die Skalierung der Achsen ist von der Empfindlichkeit der Sensoren abhängig, jedoch für das hier beschriebene Verfahren bedeutungslos.

Beim Erfassen mehrerer Meßwerte (X;Y) in einer realen Fahrzeugumgebung, in der das Erdmagnetfeld von verschiedenen Störeinflüssen überlagert wird, ergibt sich eine Meßwertverteilung, die sich im allgemeinen nicht als ein Kreis um den Ursprung des Koordinatensystems darstellt, sondern einer in der Meßebene verschobenen und gedrehten Ellipse ähnelt.

Die Mittelpunktskoordinaten der Meßwertverteilung werden vorzugsweise durch das in DE 41 15 315 A1 beschriebene Verfahren bestimmt. Für das anmeldungsgegenständliche Verfahren muß der Mittelpunkt der Meßwertverteilung zumindestens näherungsweise als Referenzpunkt für eine anschließende Koordinatentransformation bekannt sein, um Winkelangaben zu den Meßpunkten (X;Y) ermitteln zu können.

In einem ersten Schritt des Verfahrens werden die Koordinaten (X;Y) jedes erfaßten Meßwertpaares mit Bezug auf den Referenzpunkt in der Netzebene des Matrixspeichers in Polarkoordinaten (r,ϕ) umgewandelt, wobei der Winkel ϕ in mathematisch positiver Richtung von einer parallel zur Referenzrichtung und durch den Referenzpunkt verlaufenden Achse an gezählt wird. Der Radius r ist der Vektor vom Referenzpunkt zu den Koordinaten des Meßpunktes (X;Y). Diese Koordinatentransformation wird mit jedem Meßwertpaar unmittelbar im Anschluß an dessen Erfassung und Speicherung im Matrixspeicher durchgeführt.

Die Anordnung zur Registrierung der Meßwerte nach DE 41 11 171 C1 wird erfindungsgemäß um eine aus n Zellen bestehende Speichereinrichtung erweitert, deren n Speicherzellen vorzugsweise durch den Winkel ϕ adressierbar sind. Auch wenn diese Adressierung sehr vorteilhaft ist, kann die Speicherung der Polarkoordinaten (r;ϕ) natürlich auch nach einer anderen Speicherorganisation erfolgen, weil für die weitere Auswertung nur das tatsächliche Speichern dieser Koordinaten wesentlich ist.

Jeder Speicherzelle wird durch die bevorzugte Adressierung ein bestimmter Sektor θ der Netzebene zugeordnet. Bei einer Unterteilung einer in sich geschlossenen Meßwertfigur z.B. in 1°-Schritten werden für diesen Speicher n=360 Zellen benötigt. In die zum Winkelbereich θ gehörende Speicherzelle wird der zu dem Winkel ϕ aus dem Winkelbereich θ gehörende Radius r als deren Speicherinhalt rθ eingetragen. Dieser Speicher ist ferner derart organisiert, daß die Inhalte rθ der Speicherzellen stets durch neue Meßwerte (r;ϕ) für den dieser Speicherzelle zugeordneten Winkelbereich θ überschrieben werden. Damit stehen in jeder Speicherzelle grundsätzlich nur die Radien r derjenigen Meßwerte, die für die betreffende Bewegungsrichtung des Fahrzeuges den jüngsten Zeitrang haben.

Beispielsweise würden bei einer Geradeausfahrt des Fahrzeuges die Koordinaten der im zeitlichen Takt erfaßten Meßwerte (X;Y) fortlaufend in Polarkoordinaten (r;ϕ) umgewandelt, wobei der Speicherinhalt rθ der zu dieser Richtung ϕ gehörenden Speicherzelle z mit jedem Meßtakt überschrieben wird. Gerade diese Tatsache ist im Hinblick auf die Eliminierung und Kompensation von auf die Meßwertfigur einwirkenden Störfeldern besonders vorteilhaft, weil durch diese Maßnahme immer die Auswertung der aktuellsten Meßwerte ermöglicht wird.

Bereits kurze Zeit nach der Erstinbetriebnahme des Registriergerätes sind in alle n Speicherzellen Radienwerte eingetragen. Selbst wenn das Fahrzeug für eine bestimmte Zeit in eine bestimmte Raumrichtung nicht bewegt werden sollte, ist in der zu dieser Richtung ϕ gehörenden Speicherzelle z ein Wert r aus der Vergangenheit hinterlegt. Da ständig im Takt der Meßwerterfassung irgendwelche Meßdaten in diesem Speicher abgelegt werden, beinhaltet er auch in Polarkoordinaten verschlüsselt die Meßwerte zu den Bewegungsrichtungen des Fahrzeuges aus der unmittelbaren Vergangenheit vor dem für eine Bewegungsbahnrekonstruktion interessierenden Betrachtungszeitpunkt.

Wenn mit dem erfindungsgemäßen Verfahren die Meßwerte erfaßt werden, ist sichergestellt, daß zu jedem Zeitpunkt, zu dem eine Auswertung der Meßdaten zum Zwecke der Rekonstruktion der Bewegungsbahn gewünscht wird, immer aus dem gesamten Speicherinhalt die von Störeinflüssen bereinigte Lage der Meßwertfigur ermittelt werden kann, was letztlich entscheidend zur Genauigkeit der daraus abgeleiteten Aussagen beiträgt.

Man ist beispielsweise in Bezug auf Aussagen zur Meßgenauigkeit nicht wie bei dem Verfahren gemäß DE 41 15 315 A1 darauf angewiesen, daß die Fehlerkompensation erst vor verhältnismäßig kurzer Zeit durchgeführt wurde. Denn das Regelungsverfahren alleine vermag keine Auskunft darüber zu geben, in welchem Maße sich in der Zwischenzeit seit der letzten Nachregelung vielleicht sogar erhebliche Meßwertverfälschungen durch eine Lageverschiebung der Meßwertfigur in der Netzebene des Matrixspeichers eingeschlichen haben, da der Verschiebungsvektor bis zur nächsten Nachregelung konstant bleibt.

Das erfindungsgemäße Verfahren enthält hingegen zu jedem Zeitpunkt stets die aktuellsten Daten einer vollständigen Meßwertfigur. Damit ist die notwendige Voraussetzung geschaffen, jederzeit verhältnismäßig genau den Mittelpunkt der durch die letzte Fahrzeugbewegung gebildeten Meßwertfigur zu bestimmen. Dadurch können in der anschließenden Auswertung zur Rekonstruktion der Bewegungsbahn des Fahrzeuges auch kurzzeitige Driften der Meßwertfigur z.B. infolge von Temperatureinflüssen berücksichtigt werden. Der Ausgangspunkt für die anschließende Ermittlung der zu den Meßwerten gehörenden Winkelangaben ist damit zu jedem Zeitpunkt sehr genau bestimmbar, wodurch ein grundlegender Teil der Aufgabe gelöst ist.

Die eigentliche, auf das Aufzeichnungsverfahren aufsetzende Auswertung zur Bestimmung der Parameter der Meßwertfigur und damit letztlich auch die Bestimmung des Gierwinkels kann beispielsweise dadurch erfolgen, daß an die durch die gespeicherten Radienwerte dargestellbare Figur eine Ellipse oder eine andere geeignete geschlossene Kurve höherer Ordnung als Hilfsfigur angepaßt wird, wobei offensichtliche Ausreißer in den Radienwerten der Meßwertfigur ignoriert werden. Die Meßwertfigur, die durch die in den n Zellen gespeicherten Radien darstellbar ist, enthält sowohl Altwerte als auch die zuletzt erfaßten Meßwerte, wenn innerhalb des Betrachtungszeitraums, für den die Bewegungsbahn des Fahrzeuges rekonstruiert werden soll, vom Fahrzeug nicht gerade ein vollständiger Vollkreis durchfahren wurde.

Die Radien werden beispielsweise als Strahlen dargestellt, die vom Referenzpunkt in der Netzebene der Speicherkonfiguration des Matrixspeichers ausgehen. Der Referenzpunkt ist vorzugsweise die in dem Regelungsverfahren nach DE 41 15 315 A1 definierte Sollmittelpunktslage der Meßwertfigur, die wiederum in der Regel der Meßbereichsmittelpunkt ist. Natürlich könnte man statt der Darstellung der Radienwerte als Strahlen auch nur die Endpunkte der Radien darstellen oder flächenhafte Sektoren bzw. eine andere äquivalente Darstellungsart mit gleichem Aussagegehalt wählen.

Als Mittel für eine grafische Darstellung kommen verschiedene Vorrichtungen in Betracht. Nach dem Auslesen der Inhalte aller n Speicherzellen durch eine Auswertevorrichtung ist eine manuell-zeichnerische Auswertung bereits mit sehr einfachen Hilfsmitteln möglich. Ebenso kann die Auswertung schneller automatisiert mittels computergestützter Einrichtungen erfolgen.

In besonders anwenderfreundlicher Weise kann die Auswertung am Monitor erfolgen. Nachdem die Meßwertfigur als strahlenförmiges Gebilde mit Hilfe der gespeicherten Radien rθ dargestellt worden ist, bringt man eine bekannte mathematische Figur, die vorzugsweise ebenfalls am Monitor erzeugt und dargestellt wird, durch Überlagerung auf bestmögliche Weise mit den die Meßwertfigur bildenden Meßdaten zur Deckung. Diese Figurenanpassung erfolgt rechnergestützt durch Anwendung der Methode der kleinsten Fehlerquadrate.

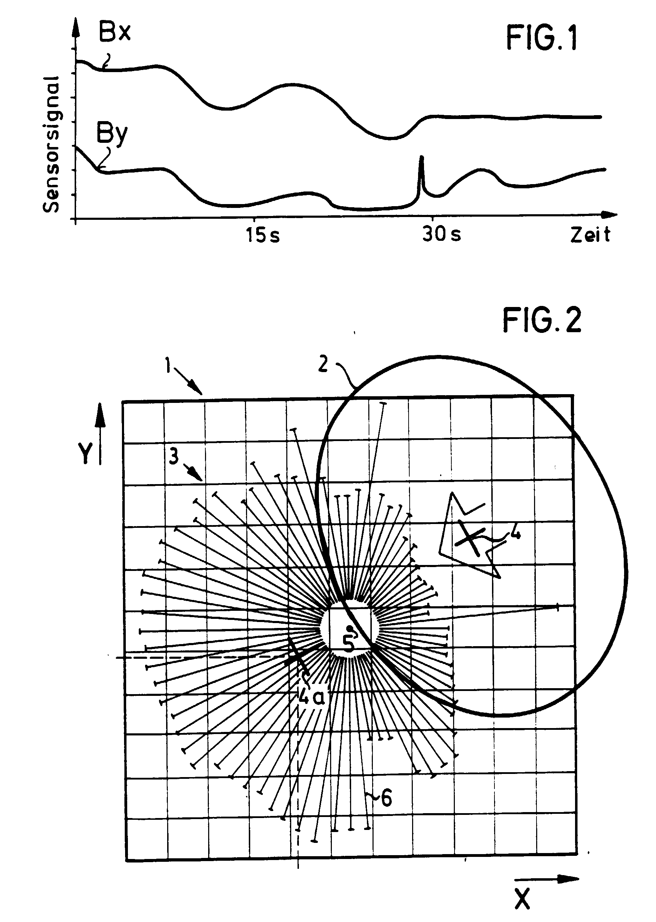

Der Mittelpunkt 4 der überlagernden Figur 2 ist aufgrund seiner festen mathematischen Beziehung zur Umfangslinie der gewählten Figur bekannt. Dieser Mittelpunkt 4 wird in die Netzebene 1 des Matrixspeichers 22 projiziert und gibt auf diese Weise auch den Mittelpunkt 4a der zuletzt durchfahrenen Meßwertfigur 3 an. Die Koordinaten des Mittelpunktes der Meßwertfigur (gestrichelte Linien in Figur 2) können so auf einfache Weise beispielsweise abgelesen oder bei einem automatisierten Verfahrensablauf registriert werden.

Der besondere Vorteil des erfindungsgemäßen Verfahrens liegt eben darin, daß sich selbst zu einem Zeitpunkt, zu dem durch eine neue Fahrt des Fahrzeuges vielleicht erst sehr wenige Meßwerte eingelesen sind, der Mittelpunkt der zu den eingelesenen Meßwerten gehörenden Meßwertfigur mit hinreichender Genauigkeit ermitteln läßt. Das ist die Grundlage für eine möglichst genaue Ermittlung des Gierwinkels des Fahrzeuges, weil der Mittelpunkt der Meßwertfigur der Scheitelpunkt für die zu den Meßwerten gehörenden Winkelangaben bildet.

Die Mittelpunktsbestimmung ist sogar dann möglich, wenn sich bei einer neuen Fahrt, die nicht gerade die erste Fahrt unmittelbar nach der ersten Inbetriebnahme des Registriergerätes ist, die zuletzt erfaßten Meßwerte möglicherweise nur auf einem kleinen Bogenstück der Meßwertfigur konzentrieren, weil das Fahrzeug vielleicht nur geradeaus gefahren ist. Die Mittelpunktsbestimmung ist deshalb möglich, weil Werte von Radien früherer Fahrten vorliegen. Die auswertbare Meßwertfigur ist immer vollständig, weil bereits kurze Zeit nach der Inbetriebnahme des Registriergerätes Meßwerte in sämtliche der n Speicherzellen eingeschrieben sind, deren Inhalte durch nachfolgende Fahrzeugbewegungen fortlaufend aktualisiert werden. Leere Speicherzellen liegen damit nur für einen sehr kurzen Zeitraum unmittelbar nach der Erstinbetriebnahme des Registriergerätes vor.

Wenn der Mittelpunkt der Meßwertfigur bekannt ist, lassen sich auch zu wenigen neu eingelesenen Meßwerten die zugehörigen Winkelangaben bestimmen, was nicht möglich wäre, wenn keine Information über die vollständige Figur vorläge. In der Praxis interessieren für die Auswertung zur Rekonstruktion der Bewegungsbahn des Fahrzeuges nur die Winkelangaben zu denjenigen Meßwerten, die beispielsweise innerhalb der letzten 45 Sekunden vor dem Fahrzeugstillstand erfaßt wurden.

Bei der Anpassung der geometrischen Hilfsfigur an die Meßwertfigur zur Ermittlung des Mittelpunkts der Meßwertfigur können neben den Mittelpunktskoordinaten noch weitere Parameter der Hilfsfigur berechnet werden. Erfolgt die Anpassung mit Hilfe einer Ellipse, können als Parameter das Verhältnis der Halbachsen der Ellipse sowie der auf die Referenzrichtung bezogene Drehwinkel ihrer Hauptachse ermittelt werden. Diese Hilfsgrößen können für die Kompensation der Störeinflüsse erforderlich sein.

Da das Ziel des erfindungsgemäßen Verfahrens die von Störeinflüssen bereinigte Ermittlung des Gierwinkels des Fahrzeuges ist und die durch die Meßwerte darstellbare Meßwertfigur Infolge der Störeinflüsse abweichend von der idealen Kreisform ellipsenförmig verzerrt wird, ist es in einem nächsten Schritt des erfindungsgemäßen Verfahrens erforderlich, die störende Beeinflussung durch Transformation der Koordinaten der die Meßwertfigur bildenden Meßwerte mit Bezug auf den ermittelten Mittelpunkt der Meßwertfigur von der ellipsenförmigen Verteilung auf einen mathematisch idealen Kreisring zu kompensieren. Durch diese Transformation der Meßwertkoordinaten (X;Y) von der elliptischen Verteilung auf die ideale Kreisform adressieren die transformierten Koordinaten (Xk;Yk) der Meßwerte diejenigen Speicherzellen in der Speicherkonfiguration des Matrixspeichers, die sie eingenommen hätten, wenn zum Zeitpunkt der Meßwerterfassung keine störenden Einflüsse vorhanden gewesen wären.

Der letzte Schritt des Verfahrens zur Ermittlung des von Störeinflüssen befreiten Gierwinkels des Fahrzeuges sieht vor, daß erneut der Polwinkel ψ ausgehend vom tatsächlichen, d.h. von dem z.B. mit der Hilfsfigur mit hinreichender Genauigkeit ermittelten Meßwertfigurenmittelpunkt zu dem auf den Kreisring transformierten Meßpunkt und der festgelegten Referenzrichtung ermittelt wird. Dieser Polwinkel ψ entspricht dem gesuchten Gierwinkel.

Die Unteransprüche des erfindungsgemäßen Verfahrens enthalten weitere vorteilhafte Ausgestaltungen der hier vorgeschlagenen Lösung. Wenn mit den Beträgen der Radien gleichzeitig noch ein die zeitliche Abfolge der Meßwerterfassung kennzeichnendes Signal in den betreffenden Speicherzellen hinterlegt wird, ist später die genaue Entstehung und Veränderungsbewegung der Lage der Meßwertfigur nachvollziehbar.

Außerdem erhöht diese Zusatzinformation die Glaubwürdigkeit und Aussagekraft der gespeicherten Radienwerte, weil man sogleich erkennt, ob vielleicht ein oder mehrere Radienwerte im Vergleich zu den übrigen Radienwerten schon recht alt sind und in welchem Teil der Meßwertfigur die aktuelleren Meßwerte liegen. Dieses das Alter des Meßwertes angebende Signal kann in einem Zählerstand ebenso wie in der aktuellen Uhrzeitangabe oder irgendeiner anderen, gleichwertigen, zur Erkennung der Chronologie geeigneten Markierung bestehen.

Zur Störunterdrückung kann es vorteilhaft sein, daß das Aktualisieren von Radienwerten durch Einschreiben neuer Radienwerte r in Speicherzellen der Speichereinrichtung 23 durch Bilden des Mittelwertes aus dem gespeicherten und dem aktuellen Radius erfolgt.

Es mag ferner vorteilhaft sein, kontinuierlich oder in zeitlichen Abständen den Mittelwert über alle gespeicherten Radien zu bilden, um diesen Wert z.B. zur Nachregelung der Empfindlichkeitseinstellungen von der sensorischen Meßeinrichtung zu gebrauchen. In Verbindung mit der Angabe des Meßwertalters könnte sich die Mittelwertbestimmung natürlich auch nur auf Meßwerte eines bestimmten Zeitintervalls beziehen.

Eine weitere, in der Praxis wichtige Ausgestaltung der Erfindung sieht vor, die Speicherung von neuen Radienwerten dann abzuschalten, wenn ein Unfallereignis erkannt und ein Auslösesignal S zur Fixierung eines in seiner Dauer vorbestimmten Zeitintervalls ΔT ausgelöst worden ist. Da der in Betracht kommende Teil Δt des Zeitintervalls ΔT ab dem Auslösezeitpunkt t₀ üblicherweise im Bereich von deutlich weniger als einer Minute liegt, darf für diesen sehr kurzen Zeitraum davon ausgegangen werden, daß sich die Meßwertfigur in ihrer Lage nicht wesentlich verändern wird, sondern hinreichend stabil bleibt, so daß die in diesen wenigen Sekunden erfaßten neuen Radienwerte keinen erforderlichen Beitrag zur Parameterbestimmung der Meßwertfigur leisten.

Die Abschaltung der Radienspeicherung zum Zeitpunkt t₀ des einen Unfall kennzeichnenden Auslösesignals S hat den Vorteil, daß durch die Unfallsituation bedingte Störeinflüsse nicht in die Meßwertfigur aufgenommen werden. Unfallsituationsbedingte Störeinflüsse werden insbesondere durch Wank- und Nickbewegungen des Fahrzeuges beispielsweise zufolge von Schleuderfahrten, durch Fahrzeugüberschlag und durch Fahrzeugschräglagen an Hängen, Böschungen oder sonstigen reliefbedingten Unebenheiten erzeugt. Auch Deformationen an der Karosserie des mit dem in Rede stehenden Registriergerät ausgestatteten verunfallten Fahrzeuges sowie die unmittelbare Nähe zur Masse des Unfallpartners bei einer Kollision führen zu Meßsignalen, die für die Rekonstruktion der zweidimensionalen Bewegungsbahn störend wirken. Deshalb ist es vorteilhaft, die nach dem Auslösesignal erfaßten Meßwerte dann nur noch gemäß dem Verfahren aus der Schrift DE 41 11 171 C1 im parallel betriebenen Ringspeicher zu hinterlegen.

Auch kann es infolge der Einflüsse von Wank- und Nickbewegungen des Fahrzeuges vorteilhaft sein, das Aktualisieren von Radienwerten durch Einschreiben neuer Radienwerte r in Speicherzellen der Speichereinrichtung 23 mit dem Auftreten von Beschleunigungswerten oberhalb einer festgelegten Schwelle trotz fortgesetzter Meßwerterfassung auszusetzen, wobei die Sensoranordnung 20 einen oder mehrere Beschleunigungssensoren umfaßt und dessen oder deren Meßsignale zur Auswertung der Logikeinrichtung 21 zugeleitet werden.

Wenn das erfindungsgemäße Verfahren, das ein Hilfsmittel zum Auffinden des aktuellen Mittelpunktes der Meßwertfigur einschließt, und zwar unabhängig von der Anzahl der während der letzten Fahrzeugbewegung eingelesenen Meßwerte, zusätzlich zu dem früher beschriebenen Regelsystem angewendet wird, ergibt sich eine äußerst wirkungsvolle Kombination der Meßwertaufzeichung, um zu jedem beliebigen Zeitpunkt infolge der besseren Möglichkeiten zur Gierwinkelbestimmung mit hoher Genauigkeit die Bewegungsbahn eines Fahrzeuges rekonstruierbar zu machen.

Abschließend soll die Erfindung noch kurz anhand von 5 Figuren erläutert werden. Es zeigen:
Figur 1 die Rohdaten der von der zweikanalig ausgebildeten Meßeinrichtung erfaßten und abgegeben Meßsignale Bx und By;
Figur 2 eine exemplarische grafiscne Darstellung der Meßwerte als Meßwertfigur nach ihrer Umwandlung in Polarkoordinaten;
Figur 3 den Verlauf des Gierwinkels des Fahrzeuges, dessen Berechnung erst nacn der Bestimmung des Mittelpunktes der Meßwertfigur möglich ist.
Figur 4 zeigt dann die aus dem Gierwinkel zusammen mit weiteren Fahrzeugbewegungsdaten rekonstruierte Bewegungsbahn des Fahrzeuges.
Figur 5 zeigt ein Blockdiagramm für eine dem Verfahren zugrunde liegende vereinfachte Schaltungsanordnung.

Nachdem die Werte der in den Speicherzellen hinterlegten Radien z.B. auf einem Monitor in Form von von der Sollmittelpunktslage 5 der Meßwertfigur 3 ausgehende Strahlen 6 grafisch dargestellt sind, wird z.B. eine in Lage und Gestalt selbsttätig oder manuell veränderbare elliptische Figur 2 an die Meßwertfigur 3 durch bestmögliche Überlagerung angelegt. Der Mittelpunkt 4 der geometrischen Hilfsfigur ist durch einfache mathematische Beziehungen bekannt. Projiziert man diesen Mittelpunkt 4 nun nach erfolgter Anpassung der Ellipse 2 an das Gebilde der Meßwertfigur 3 in die Darstellungsebene 1 der Meßwertfigur, erhält man unmittelbar die tatsächlichen, von Störungen befreiten Mittelpunktskoordinaten 4a der Meßwertfigur 3, die sodann registriert werden können.

Diese Mittelpunktskoordinaten 4a sind der Ausgangspunkt für die Bestimmung der jeweiligen Winkelangaben ψ, die zu den einzelnen von der elliptischen Meßwertverteilung auf einen Kreisring transformierten Meßwerten (Xk;Yk) gehören. Stellt man die so ermittelten Winkelangaben ψ kontinuierlich in einem zeitlichen Verlauf dar, ergibt sich ein Gierwinkelverlauf 10 gemäß der Figur 3. Ein Gierwinkel von ψ=0° bedeutet in der gewählten Darstellung Fahrtrichtung. Für manche Anwendungen ist es vorteilhaft, die Referenzrichtung, auf die die Winkelangaben bezogen sind, nicht in Fahrzeuglängsachse, sondern in Nordrichtung auszurichten. In dieser Figur ist der Verlauf des Gierwinkels ψ innerhalb eines Zeitraums von ΔT=45 Sekunden dargestellt. Der Zeitraum Δt beginnt mit dem Zeitpunkt t₀ und läuft nach dem Auftreten des Auslösesignals S bis zum Ende des Zeitintervalls ΔT.

Um mit diesen zeitlich geordneten Winkelangaben letztlich die Bewegungsbahn des Fahrzeuges rekonstruieren zu können, bedarf es noch weiterer Fahrzeugbewegungsdaten, wie beispielsweise der Fahrzeuggeschwindigkeit. Ergebnismäßig läßt sich mit diesen Angaben der Verlauf der Bewegungsbahn 11 gemäß der Figur 4 darstellen. Zum besseren Verständnis ist symbolhaft der fortschreitende Verlauf des Fahrzeuges 12 eingezeichnet.

Man erkennt hier auch die Folgen ungenauer Winkelangaben. Meßungenauigkeiten beim Winkel ψ infolge ungenauer Scheitelpunktsbestimmung führen zu einer erheblichen lateralen Lageverschiebung (Weg y) und Formänderung der dargestellten Bewegungsbahn 11. Die Nullmetermarke in der Figur 4 bezieht sich auf den Zeitpunkt tₒ des durch Unfalldetektion ausgelösten Signals S.

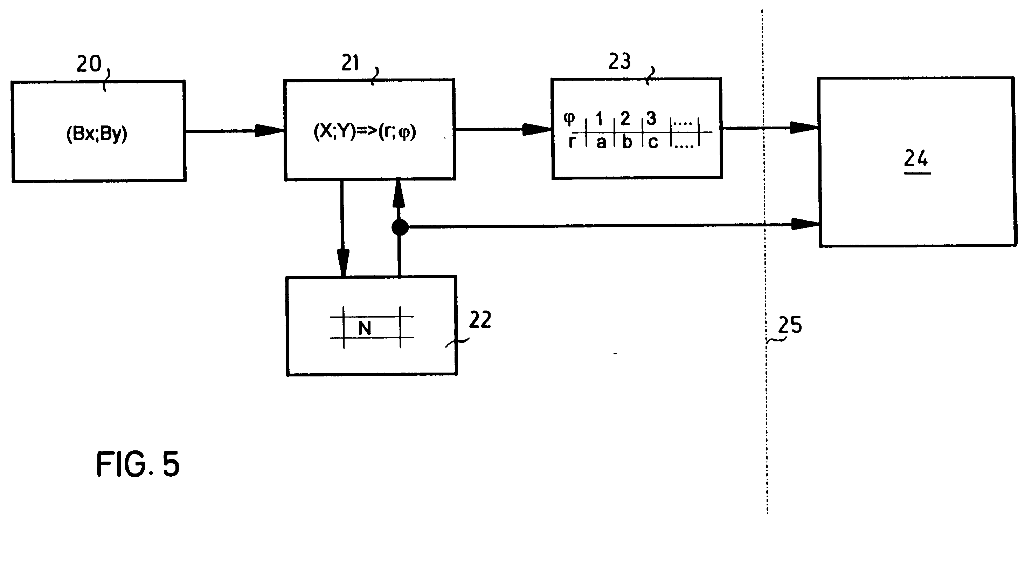

Die Figur 5 zeigt in Form eines vereinfachten Blockschaltbildes eine Anordnung zur Durchführung des Verfahrens. Die Komponenten Bx und By des Erdmagnetfeldes werden mit der Sensoranordnung 20 kontinuierlich erfaßt und als Meßwertpaar der Logikeinrichtung 21 zugeführt. Nachdem der Meßwert z.B. auf Plausibilität überprüft worden ist, wird er gemäß seinen Koordinaten in den Matrixspeicher 22 eingeschrieben. In der Logikeinrichtung werden sodann die kartesischen Koordinaten (X;Y) des Meßwertes in Polarkoordinaten (r;ϕ) umgewandelt. Der zu dem Meßwertpaar gehörende Winkel ϕ bildet vorzugsweise die Adresse zur Speicherung des zugehörigen Wertes des Radius r in einer der n Zellen von einem der Logikeinrichtung 21 zugeordneten Speicher 23.

Die Koordinaten (X;Y) der in den Matrixspeicher eingelesenen Meßwerte, die Koordinaten des in der Speicherkonfiguration des Matrixspeichers festgelegten Referenzpunktes, die Information über die festgelegte Referenzrichtung sowie die zu den Meßpunkten gehörenden Polarkoordinaten (r;ϕ) werden einer Auswerteeinrichtung 24 zur Verfügung gestellt, die die Parameter von der durch die Radienwerte darstellbare Meßwertfigur ermittelt. Dazu wird vorzugsweise erfindungsgemäß eine geometrische Hilfsfigur an die Meßwertfigur angepaßt. Sodann werden die Parameter der Hilfsfigur bestimmt, insbesondere deren Mittelpunktskoordinaten.

Mit den ermittelten Parametern der Hilfsfigur werden die die Meßwertfigur bildenden Meßwerte auf einen Kreisring transformiert. Als nächstes wird der Polwinkel ψ vom Meßwertfigurenmittelpunkt zu den auf einen Kreisring transformierten Meßpunkten (Xk;Yk) ermittelt. Dieser Polwinkel ψ stellt den gesuchten, von Störeinflüssen bereinigten Gierwinkel des Fahrzeuges dar.

Die Ermittlung des Polwinkels ψ wird man in der Praxis nur für einen bestimmten Betrachtungszeitraum ΔT durchführen, nämlich jener Zeit, für die man die Bewegungsbahn des Fahrzeuges rekonstruieren will. Die derart gefundenen Gierwinkelwerte ψ werden abgespeichert und stehen damit zur weiteren Auswertung in Verbindung mit weiteren Bewegungsgrößen des Fahrzeuges, insbesondere dessen Geschwindigkeit, zur Verfügung.

Die Auswerteeinrichtung 24 ist vorzugsweise als eine vom mobilen Registriergerät, welches die Meßwerterfassung- und Meßwertspeichereinrichtungen 20, 21, 22 und 23 beinhaltet, unabhängige, externe Geräteeinheit ausgebildet, was durch die Trennungslinie 25 in der Figur 5 angezeigt sein soll.

## Patentansprüche

1. Verfahren zur Ermittlung des Gierwinkels eines Fahrzeuges, insbesondere zur Anwendung in Verbindung mit einem als Unfalldatenspeicher ausgebildeten Registriergerät, wobei das Registriergerät eine Sensoranordnung (20) beinhaltet, die die beiden Komponenten Bx und By des Vektors der Induktion B des Erdmagnetfeldes als zwei zueinander orthogonale Meßwertsignale X und Y fortlaufend erfaßt, sowie eine Logikeinrichtung (21), einen Matrixspeicher (22) und einen aus n Speicherzellen bestehenden Speicher (23),
a. bei dem die erfaßten Meßwertsignale X und Y am Ausgang der Sensoranordnung (20) als Meßwertpaar (X;Y) zur Verfügung gestellt und in dem Matrixspeicher (22) abgelegt werden,
b. bei dem jedes Meßwertpaar einen Meßwertpunkt (X;Y) in einem kartesischen Koordinatensystem beschreibt, dessen Achsen entsprechend den Erfassungsrichtungen der Sensoranordnung ausgerichtet sind und dessen Ursprung durch die Meßbereichsnullpunkte der Sensoranordnung bestimmt ist,
c. bei dem die Meßwertpunkte (X;Y) in Polarkoordinaten (r;ϕ) umgewandelt werden,
wobei r den Radius von einem in der durch die Erfassungsrichtungen der Sensoranordnung (20) aufgespannten Meßebene festgelegten Referenzpunkt, welcher vorzugsweise der Meßbereichsmittelpunkt (5) ist, zum durch das Meßwertpaar gegebenen Meßpunkt (X;Y) darstellt und ϕ den dazugehörigen Polwinkel bildet, dessen einer Schenkel durch einen mit dem Radius r zusammenfallenden Richtungsstrahl und dessen anderer Schenkel durch eine in der Meßebene beliebig festgelegte Referenzrichtung gebildet wird,
d. bei dem die Polarkoordinaten (r;ϕ) in einem aus n Zellen bestehendem Speicher (23) gespeichert werden, wobei
* jede Speicherzelle einem bestimmten Winkelbereich entspricht und
* der gespeicherte und zu einem bestimmten Winkelbereich θ gehörende Radius rθ beim erneuten Auftreten eines Meßpunktes mit einem zu diesem Winkelbereich θ gehörenden Winkel ϕ stets durch den neuen Wert vom Radius r ersetzt wird,
e. bei dem Parameter der durch die in den n Speicherzellen abgelegten Polarkoordinaten darstellbaren Meßwertfigur bestimmt werden,
f. bei dem die im Matrixspeicher (22) abgelegten Meßwertpunkte (X;Y) mit den ermittelten Parametern in die Koordinaten (Xk;Yk) derart transformiert werden, daß die Verteilung der Meßwerte durch einen Kreis beschrieben werden kann, und
g. bei dem diejenigen Winkel ψ ermittelt werden, die sich ausgehend von der in der Meßebene festgelegten Referenzrichtung mit Bezug auf die Mittelpunktskoordinaten des Kreises zu den Meßpunktskoordinaten (Xk;Yk) ergeben, wobei die Winkel ψ den gesuchten Gierwinkeln zu den einzelnen, ursprünglich erfaßten Meßwerten (Bx;By) entsprechen.

2. Verfahren nach Anspruch 1, dadurch gekennzeichnet,
daß die für die Transformation der Koordinaten der Meßpunkte benötigten Parameter von der durch die Meßwertverteilung darstellbaren Meßwertfigur (3) dadurch ermittelt werden, daß eine Ellipse (2) an die Meßwertfigur (3) angepaßt wird und als gesuchte Parameter der Mittelpunkt der Ellipse, das Verhältnis ihrer Halbachsen sowie der auf die Referenzrichtung bezogene Drehwinkel ihrer Hauptachse bestimmt werden.

3. Verfahren nach Anspruch 1, dadurch gekennzeichnet,
daß die für die Transformation der Koordinaten der Meßpunkte benötigten Parameter von der durch die Meßwertverteilung darstellbaren Meßwertfigur (3) dadurch ermittelt werden, daß eine geschlossene Kurve höherer Ordnung an die Meßwertfigur (3) angepaßt wird.

4. Verfahren nach den Ansprüchen 2 oder 3, dadurch gekennzeichnet,
daß die Auswertevorrichtung (24) einen Monitor zur Darstellung der Meßwertverteilung besitzt und mit Mitteln zur Erzeugung und flexiblen Darstellung von der an die Meßwertfigur (3) anzupassenden Figur ausgestattet ist.

5. Verfahren nach einem der vorangegangenen Ansprüche, dadurch gekennzeichnet,
daß der über alle Speicherinhalte rθ kontinuierlich oder in festgelegten zeitlichen Abständen als Mittelwert bestimmte Radius R als Regelgröße in einem Regelkreis, insbesondere zur Nachregelung der Empfindlichkeitseinstellungen der Sensoranordnung, verwendet wird.

6. Verfahren nach einem der vorangegangenen Ansprüche, dadurch gekennzeichnet,
daß das Aktualisieren von Radienwerten durch Einschreiben neuer Radienwerte r in Speicherzellen der Speichereinrichtung (23) mit dem Auftreten eines durch eine Unfalldetektion ausgelösten Signals S für einen in Verbindung mit dem auslösenden Signal S festgelegten Zeitraum Δt nach dem Auftreten dieses Signals S trotz fortgesetzter Meßwerterfassung ausgesetzt wird.

7. Verfahren nach einem der vorangegangenen Ansprüche, bei dem die Sensoranordnung (20) einen oder mehrere Beschleunigungssensoren umfaßt und dessen oder deren Meßsignale zur Auswertung der Logikeinrichtung (21) zugeleitet werden, dadurch gekennzeichnet,
daß das Aktualisieren von Radienwerten durch Einschreiben neuer Radienwerte r in Speicherzellen der Speichereinrichtung (23) mit dem Auftreten von Beschleunigungswerten oberhalb einer festgelegten Schwelle trotz fortgesetzter Meßwerterfassung ausgesetzt wird.

## Claims

1. A process for determining the yaw angle of a vehicle, in particular for application in conjunction with a registering device constructed as an accident data memory, the registering device containing a sensor arrangement (20) which continuously detects the two components Bx and By of the vector of induction B of the earth's magnetic field as two measured value signals X and Y at right angles to one another, and a logic means (21), a matrix memory (22) and a memory (23) comprising n memory cells,
a. in which the detected measured value signals X and Y are made available at the output of the sensor arrangement (20) as a pair of measured values (X; Y) and stored in the matrix memory (22),
b. in which each pair of measured values describes a measured value point (X; Y) in a cartesian coordinate system whereof the axes are aligned in accordance with the directions of detection by the sensor arrangement and whereof the origin is determined by the measuring range zero points of the sensor arrangement,
c. in which the measured value points (X; Y) are converted to polar coordinates (r; φ),
where r is the radius from a reference point, which is established in the measurement plane extending through the directions of detection by the sensor arrangement (20) and which is preferably the centre point (5) of the measuring range, to the measuring point (X; Y) given by the pair of measured values, and φ forms the associated polar angle whereof one limb is formed by a directed beam coinciding with the radius r and the other limb is formed by a reference direction established arbitrarily in the measurement plane,
d. in which the polar coordinates (r; φ) are stored in a memory (23) comprising n cells,
* each memory cell corresponding to a particular angular range, and
* the stored radius rθ associated with a certain angular range θ being replaced continuously by the new value of radius r when a measuring point again occurs having an angle φ associated with this angular range θ,
e. in which parameters of the measured value figure which may be represented by the polar coordinates stored in the n memory cells are determined,
f. in which the measured value points (X; Y) stored in the matrix memory (22) are transformed using the determined parameters to the coordinates (Xk; Yk) such that the distribution of the measured values may be described by a circle, and
g. in which the angles ψ produced from the reference direction established in the measurement plane relating to the centre point coordinates of the circle to the measuring point coordinates (Xk; Yk) are determined, the angles ψ corresponding to the desired yaw angles relating to the individual, originally detected measured values (Bx; By).

2. A process according to Claim 1, characterized in that the parameters of the measured value figure (3), which may be represented by the measured value distribution, which are needed for the transformation of the coordinates of the measuring points, are determined in that an ellipse (2) is adapted to the measured value figure (3), and the centre point of the ellipse, the ratio of its semiaxes and the rotary angle of its main axis relating to the reference direction are determined as the desired parameters.

3. A process according to Claim 1, characterized in that the parameters of the measured value figure (3), which may be represented by the measured value distribution, which are needed for the transformation of the coordinates of the measuring points, are determined in that a closed curve of higher order is adapted to the measured value figure (3).

4. A process according to Claims 2 or 3, characterized in that the evaluation means (24) includes a monitor for representing the measured value distribution and is equipped with means for generating and flexibly representing the figure to be adapted to the measured value figure (3).

5. A process according to one of the preceding claims, characterized in that the radius R determined as an average of all the memory contents rθ, continuously or at established intervals, is used as the control variable in a control loop, in particular for a follow-up adjustment of the sensitivity settings of the sensor arrangement.

6. A process according to one of the preceding claims, characterized in that updating of radius values by writing new radius values r to memory cells of the memory means (23) is suspended if a signal S triggered by detection of an accident occurs for a period Δt established in conjunction with the triggering signal S once this signal S has occurred, despite continued detection of measured values.

7. A process according to one of the preceding claims, in which the sensor arrangement (20) contains one or more acceleration sensors and the measurement signals from this or these are fed to the logic means (21) for evaluation, characterized in that the updating of radius values by writing new radius values r to memory cells of the memory means (23) is suspended if acceleration values above an established threshold occur, despite continued detection of measured values.

## Revendications

1. Procédé pour la détermination de l'angle de giration d'un véhicule automobile, tout particulièrement pour l'application en combinaison avec un appareil d'enregistrement réalisé en mémoire de données d'accident, ledit appareil d'enregistrement contenant un dispositif à capteurs (20) qui saisit, en continu, les deux composantes Bx et By du vecteur de l'induction B du champ magnétique terrestre comme deux signaux de grandeur de mesure X et Y orthogonaux l'un par rapport à l'autre, ainsi qu'un dispositif logique (21), une mémoire matricielle (22) et une mémoire (23) composée de n cellules de mémoire,
a. dans lequel les signaux de grandeur de mesure X et Y acquis sont mis à disposition comme paires de grandeurs de mesure (X ; Y) à la sortie du dispositif à capteurs (20) et stockés dans la mémoire matricielle (22),
b. dans lequel chaque paire de grandeurs de mesure décrit un point de grandeurs de mesure (X ; Y) dans un système de coordonnées cartésiennes dont les axes sont orientés conformément aux directions d'acquisition du dispositif à capteurs et dont l'origine est déterminée par les points zéro de la plage de mesure dudit dispositif à capteurs,
c. dans lequel les points de grandeur de mesure (X ; Y) sont transformés en coordonnées polaires (r ; ϕ),
r représentant le rayon allant d'un point de référence déterminé dans le plan de mesure engendré par les directions d'acquisition du dispositif à capteurs (20) qui est, de préférence, le point central de la plage de mesure (5), au point de mesure (X ; Y) donné par la paire de grandeurs de mesure et ϕ formant l'angle polaire correspondant dont l'une des branches est formée par une droite orientée directionnelle coïncidant avec le rayon r et dont l'autre branche est formée par une direction de référence déterminée arbitrairement dans le plan de mesure,
d. dans lequel les coordonnées polaires (r ; ϕ) sont mémorisées dans une mémoire (23) constituée de n cellules,
* chaque cellule de mémoire correspondant à une zone angulaire déterminée et
* le rayon rθ mémorisé et appartenant à une plage angulaire θ déterminée étant, en cas de nouvelle apparition d'un point de mesure avec un angle ϕ appartenant à cette zone angulaire θ, toujours remplacé par la nouvelle valeur du rayon r,
e. dans lequel sont déterminés des paramètres de la figure de grandeurs de mesure représentable par les coordonnées polaires stockées dans les n cellules de mémoire,
f. dans lequel les points de grandeur de mesure (X ; Y) stockés dans la mémoire matricielle (22) avec les paramètres déterminés sont transformés dans les coordonnées (Xk ; Yk) de telle sorte que la répartition des grandeurs de mesure peut être décrite par un cercle, et
g. dans lequel sont déterminés ceux des angles ψ qui résultent en partant de la direction de référence déterminée dans le plan de mesure référé aux coordonnées du point central du cercle par rapport aux coordonnées du point de mesure (Xk ; Yk), les angles ψ correspondant aux angles de giration recherchés par rapport aux différentes grandeurs de mesure (Bx ; By) initialement acquises.

2. Procédé selon la revendication 1,
caractérisé par le fait
que les paramètres nécessaires pour la transformation des coordonnées des points de mesure sont déterminés par la figure de grandeurs de mesure (3) représentable par la répartition des grandeurs de mesure, par le fait qu'une ellipse (2) est adaptée à ladite figure de grandeurs de mesure (3) et que, comme paramètres recherchés, sont déterminés le point central de l'ellipse, le rapport de ses demi-axes ainsi que l'angle de rotation de son axe principal référé à la direction de référence.

3. Procédé selon la revendication 1,
caractérisé par le fait
que les paramètres nécessaires pour la transformation des coordonnées des points de mesure sont déterminés par la figure de grandeurs de mesure (3) représentable par la répartition des grandeurs de mesure, par le fait qu'une courbe fermée d'ordre supérieur est adaptée à ladite figure de grandeurs de mesure (3).

4. Procédé selon l'une quelconque des revendications 2 ou 3,
caractérisé par le fait
que le dispositif d'exploitation (24) possède un moniteur pour la représentation de la répartition des grandeurs de mesure et qu'il est doté de moyens pour la génération et la représentation flexible de la figure devant être adaptée à la figure de grandeurs de mesure (3).

5. Procédé selon l'une quelconque des revendications précédentes,
caractérisé par le fait
que le rayon R déterminé, en continu ou en des intervalles de temps définis, comme valeur moyenne englobant tous les contenus de mémoire rθ est utilisé comme grandeur de réglage dans un circuit d'asservissement, tout particulièrement pour le réajustage des réglages de sensibilité du dispositif à capteurs.

6. Procédé selon l'une quelconque des revendications précédentes,
caractérisé par le fait
que, dès l'apparition d'un signal S déclenché par une détection d'accident, la mise à jour de valeurs de rayon par l'inscription de nouvelles valeurs de rayon r dans des cellules de mémoire du dispositif de mémorisation (23) est arrêtée pendant un espace de temps Δt fixé en rapport avec le signal déclenchant S après l'apparition de ce signal S, malgré la poursuite de l'acquisition de grandeurs de mesure.

7. Procédé selon l'une quelconque des revendications précédentes, dans lequel le dispositif à capteurs (20) englobe un ou plusieurs capteurs d'accélération et duquel ou desquels les signaux de mesure sont acheminés, pour l'exploitation, au dispositif logique (21),
caractérisé par le fait
que, dès l'apparition de valeurs d'accélération supérieures à un seuil déterminé, la mise à jour de valeurs de rayon par l'inscription de nouvelles valeurs de rayon r dans des cellules de mémoire du dispositif de mémorisation (23) est arrêtée, malgré la poursuite de l'acquisition de grandeurs de mesure.
